(19) **Europäisches Patentamt**
**European Patent Office**
**Office européen des brevets**

(11) **EP 2 899 693 A1**

(12) **EUROPEAN PATENT APPLICATION**

(43) Date of publication:
**29.07.2015 Bulletin 2015/31**

(51) Int Cl.:
***G06T 11/00*** *(2006.01)*

(21) Application number: **14305097.9**

(22) Date of filing: **23.01.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Cyclop SAS**
**75010 Paris (FR)**

(72) Inventor: **Ronsin, Samuel**
**75010 Paris (FR)**

(74) Representative: **Hirsch & Associés**
**137, rue de l'Université**
**75007 Paris (FR)**

(54) **Image texturing**

(57) The invention notably relates to a method for image texturing. The method comprises: providing (S10) an input image $u$, determining (S20) an output image ($w^*$) as a solution of an optimization program. The program

is equal to $\underset{w}{\mathrm{argmin}} \parallel \beta \cdot w - \alpha \cdot u \parallel$ under the

constraint that the average and the periodical autocorrelation of the output image are equal to a mean and a covariance that are a function of a texture image (v). $\parallel \cdot \parallel$ is a predetermined distance, and $\alpha$ and $\beta$ are predetermined luminance vectors respective to the input image and to the texture image (v).

The method constitutes an improved solution for image texturing.

$$\boxed{\text{providing an input image (u)}} \quad \text{S10}$$

$$\boxed{\begin{array}{c}\text{determining an output image (w}^*\text{) as a} \\ \text{solution of an optimization program equal to} \\ \underset{w}{\mathrm{argmin}} \parallel \beta \cdot w - \alpha \cdot u \parallel\end{array}} \quad \text{S20}$$

## FIG. 1

EP 2 899 693 A1

**Description**

**FI**ELD **OF THE INVENTION**

The invention relates to the field of computer programs and systems, and more specifically to a method, program and system for image texturing.

**BACKGROUND**

A number of systems and programs are offered on the market and in the scientific literature to perform image processing. Among the existing processes, some methods relate to image texturing. Image texturing consists of processing an image to modify the texture thereof. Typically, such methods apply to an input image a texture derived from a texture image. As for all image processing methods, research on image texturing is concerned by the quality of the solution on the one hand, notably how well or accurately the texture of the texture image is applied to the input image and how well data of the input image are retrieved in the output, and speed of the method on the other hand. Indeed, for some applications, a too long method would be unsatisfactory from a user-experience and a resource consumption point of view, whatever the quality may be.

A solution to perform image texturing is disclosed in US 6,919,903 B2. This document discloses a method for generating texture for a single input pixel image. The method comprises partitioning the input pixel image into a plurality of blocks of pixels of the input pixel image to be assigned texture, arranged in a predetermined order. And for each block in the predetermined order, the method further comprises searching a set of texture blocks for a next texture block for the input pixel image that best matches a previous texture block in a region where the previous texture block and the next texture block overlap; finding a minimum cost path through the region; and inserting the next texture block adjacent to the previous texture block in the input pixel image according to the minimum cost path and wherein an amount of the overlap in the region is $^{1}/_{6}$ of a length of a side of the block. The pixel image initially may include a destination image, and the method may further comprise low-pass filtering the destination image to generate a correspondence map of the destination image.

The solution proposed in this document presents the issue of being slow, because the complexity of the disclosed algorithm relative to the size of the processed images may be prohibitive for practical applications. Moreover, this document necessitates the application of the above-mentioned low-pass filtering to the destination image (unless which the whole process would be compromised). This leads to a degradation of the quality of the result.

Within this context, there is still a need for an improved solution for image texturing.

SUMMARY OF THE INVENTION

It is therefore provided a method for image texturing, wherein the method comprises providing an input image $u$, determining an output image as a solution of an optimization program equal to $\underset{w}{\mathrm{argmin}} \parallel \beta \cdot w - \alpha \cdot u \parallel$ under the constraint that the average and the periodical autocorrelation of the output image are equal to a mean and a covariance that are a function of a texture image, wherein $\parallel \cdot \parallel$ is a predetermined distance, and $\alpha$ and $\beta$ are predetermined luminance vectors respective to the input image and to the texture image.

The method may comprise one or more of the following:

- the predetermined distance is the quadratic distance and determining the output image comprises determining the Fourier transform of the solution of the optimization program and then inverting said Fourier transform of the solution of the optimization program;
- the mean and the covariance, to which the average and the periodical autocorrelation of the output image are constrained to be equal to, are the average and the periodical autocorrelation of a texturing image that is a function of the texture image and of which Fourier transform is determined;
- determining the Fourier transform of the solution of the optimization program comprises, for each frequency, rotating uniformly each channel of the Fourier transform of the texturing image to align, in the complex plane, the Fourier transforms of the scalar product between the texturing image and the predetermined luminance vector respective to the texture image and of the scalar product between the input image and its respective predetermined luminance vector;
- rotating uniformly each channel of the Fourier transform of the texturing image comprises multiplying said Fourier transform of the texturing image with the complex exponential of the difference between the phases of the Fourier transforms of the scalar product between the input image and its respective predetermined luminance vector and of the scalar product between the texturing image and the predetermined luminance vector respective to the texture image;

- the texturing image is retrieved from a database and corresponds to the result of compressing an image derived from the texture image, under the constraint that the Fourier transform of the texturing image is substantially equal to the Fourier transform of the image derived from the texture image modulo a multiplication by a given phase;
- the compressing includes computing the empirical variance and the average of the texture image or the image derived from the texture image, computing the principal component of the texture image or the image derived from the texture image, applying a mask on the result of inverting the result of multiplying the Fourier transform of the image derived from the texture image with the phase of the Fourier transform of the scalar product between the computed principal component and the image derived from the texture image;
- the predetermined luminance vector respective to the texture image is equal to the computed principal component;
- the texturing image corresponds to the result of processing the borders of an image derived from the texture image to join them;
- the method comprises at least part of the processing of the borders of the image derived from texture image to join them, including computing a gap image, representative of the discontinuities of the periodization of the image derived from the texture image, computing the Fourier transform of the gap image, subtracting to the Fourier transform of the image derived from the texture image the Fourier transform of the gap image weighted by a propagating coefficient;
- the Fourier transform of the texturing image is further processed by applying a frequency filtering;
- the texture image is an RGB image, the output image being determined as an RGB image; and/or
- the periodical autocorrelation of an RGB image $s$ of dimension $N_1 x N_2$ and of average $m_s$ is defined for each pixel of coordinates $x_1$ and $x_2$ of the RGB image $s$ as

$$\Gamma_s(x_1, x_2) = \frac{1}{N_1 N_2} \sum_{x'_1, x'_2} \left( s\left(x_1 + x'_1, x_2 + x'_2\right) - m_s \right) \left( s\left(x'_1, x'_2\right) - m_s \right)^{\mathrm{T}}.$$

It is also provided a method for compressing an image, wherein the method compresses an initial image (i.e. memory size reduction of the initial image) under the constraint that the Fourier transform of the compressed image is substantially equal to the Fourier transform of the initial image modulo a multiplication by a given phase.

The compressing may include computing the empirical variance and the average of the initial image, computing the principal component of the initial image, applying a mask on the result of inverting the result of multiplying the Fourier transform of the initial image with the phase of the Fourier transform of the scalar product between the computed principal component and the initial image.

It is further provided a computer program comprising instructions for performing any method above.

It is further provided a computer readable storage medium having recorded thereon the computer program.

It is further provided a system comprising a processor coupled to a memory having recorded thereon the computer program. The system may further comprise a display. Alternatively or additionally, the system may further comprise a camera.

## BRIEF DESCRIPTION OF THE DRAWINGS

Embodiments of the invention will now be described, by way of non-limiting example, and in reference to the accompanying drawings, where:

- FIG. 1 shows a flowchart of an example of the method;
- FIG. 2 shows an example of the system; and
- FIGS. 3-14 illustrate examples of the method.

## DETAILED DESCRIPTION OF THE INVENTION

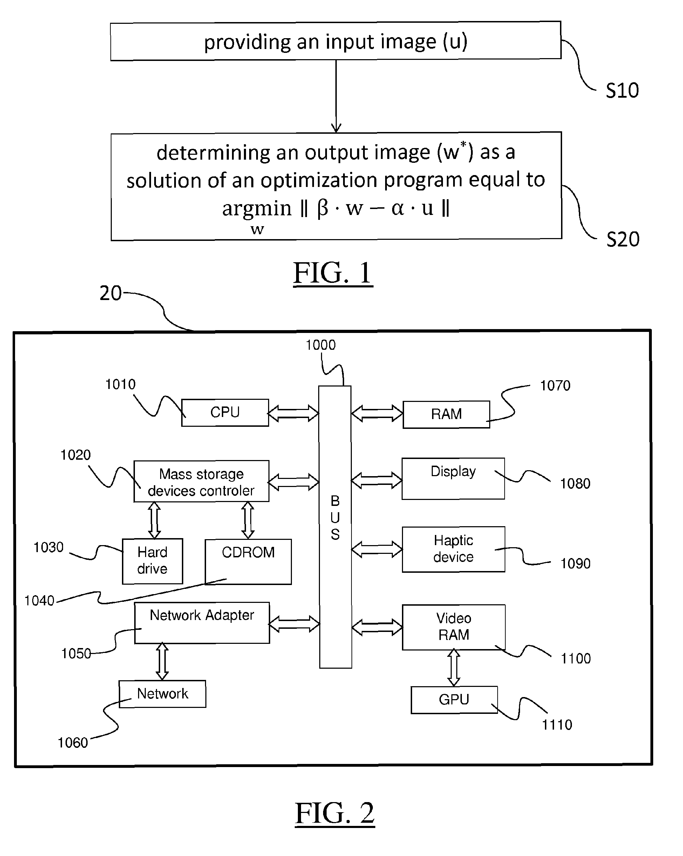

With reference to the flowchart of FIG. 1, it is proposed a method for image texturing. The method comprises providing S 10 an input image, noted $u$. The method also comprises determining S20 an output image, noted $w^*$, as a solution of an optimization program. The program is equal to $\underset{w}{\operatorname{argmin}} \| \beta \cdot w - \alpha \cdot u \|$ under the constraint that the average and the periodical autocorrelation of the output image are equal to a mean and a covariance that are a function of a texture image, noted $v$. $\|\cdot\|$ is a predetermined distance. $\alpha$ and $\beta$ are predetermined luminance vectors respective to the input image *u* and to the texture image *v*. Such a method improves image texturing.

Notably, the method determines, based on an input image and on a texture image, an output image that essentially consists of the application on the input image of a texture corresponding to the texture image. The fact that the output image corresponds to the application of a texture that is a function of the texture image is ensured by the constraint that the average and the periodical autocorrelation of the output image are equal to a mean and a covariance that are a function of the texture image. This specifically ensures that colors contained in the texture image are present in the output image in basically the same quantities and with basically the same regularity and/or granularity, or that a zoom in any of either the output or a Gaussian texture synthesis based on the texture image prevents a viewer from identifying the image being viewed. The fact that the application of the texture is performed on the input image is captured by the formula of the optimization program, which is specifically $\underset{w}{\operatorname{argmin}} \| \beta \cdot w - \alpha \cdot u \|$. This program ensures that the output image keeps information of the input image, without discarding any spatial frequency. Specifically, this program ensures that the contours of the input image are conveyed by the output image. This may mean that a zooming out of both the input image and the output image renders both images globally more similar relative to their geometry, e.g. according to the Euclidian distance. In other words, putting colors and contrast aside, a viewer of both images would have the same visual impression from far away. The luminance vectors $\alpha$ and $\beta$ respective to the input image and to the texture image ensure that the method also works correctly with color images. Specifically, as discussed in more details later, the statistical distribution of colors contained in the output image is compliant with the statistical distribution of colors contained in the texture image. This can be verified via a distance between such distributions being under a predetermined threshold, as known to the skilled person. Notably, if the texture image is monochrome, the method ensures that the output image is also monochrome and of the same color.

The method may be computer-implemented. This means that the steps (or substantially all the steps) of the method may be executed by at least one computer, or any system alike. Thus, steps of the method may be performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement the user's wishes. In examples, this level may be user-defined and/or pre-defined. In an example, the method is launched by the user who designates directly input image *u* and thereby triggers the providing S10. The user may also designate, directly or indirectly, texture image *v*, thereby controlling the determining S20, as discussed later.

A typical example of computer-implementation of the method is to perform the method with a system adapted for this purpose. The system may comprise a processor coupled to a memory, the memory having recorded thereon a computer program comprising instructions for performing the method. The memory may also store a database (i.e. a group of pieces of computerized data organized for fast retrieval), for example a database of texture images, or other images derived thereof such as texturing images, and/or input images which may be used as inputs of the method. This retrieval of inputs from a database stored in the memory in order to perform the method is discussed more extensively later. The memory is any hardware adapted for such storage, possibly comprising several physical distinct parts (e.g. one for the program, and possibly one for the database). Alternatively or additionally, the system may comprise a communication interface (e.g. a telecommunication interface) to interact with a remote database so as to perform the above. The system may alternatively or additionally comprise a camera, for capturing an input image *u* and/or a texture image *v* of the method, and/or a display (e.g. a screen) to allow a user to view the output image *w\**. The system may also comprise a haptic device, such as (among others) a mouse, a touchpad, a sensitive screen, or a contact pen, so as to allow a user to interact with the system and trigger or interact with the method. The system may be a desktop computer, a laptop computer, a tablet, or a mobile phone.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method.

FIG. 2 shows an example the system: system 20. System 20 comprises a central processing unit (CPU) 1010 connected to an internal communication BUS 1000, a random access memory (RAM) 1070 also connected to the BUS.

The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks; and CD-ROM disks 1040. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The providing S10 is now discussed.

The method comprises providing at S10 so-called "input" image $u$. As mentioned above, the providing S 10 may be triggered by the user, for example by selecting, among several possible input images, input image $u$ to which contours the user wants to apply a texture. Alternatively or additionally, the user may capture input image $u$ via a camera. The method may comprise such selection and/or such capturing prior to the providing S10. Also, the method may comprise a re-dimensioning (i.e. modification of the dimension, e.g. zooming in, zooming out, and/or trimming) of input image $u$ prior to the determining S20. Indeed, owing to the way the optimization program is written, the dimensioning of $u$ corresponds to the size desired for the output, and may advantageously be defined via user-interaction. Input image $u$ is thus merely an image considered as the main input of the method. In any case, input image $u$ may be a picture such a photo, e.g. representing at least one real object or landscape, e.g. and in any case different from white noise. Also, input image $u$ may be a grey-level image or a color image, such as an RGB image. Any format may be contemplated by the method.

The determining S20 is now discussed.

Aside input image $u$, the method also considers a so-called "texture image" $v$. Texture image $v$ is called this way because it is the image whose texture the method (basically or substantially) applies to input image $u$. The method may comprise providing texture image $v$, but this is not necessarily the case, as exemplified later. Indeed, the inputs required are those that allow defining and solving the optimization program, and texture image $v$ as such is not necessarily required for that. Texture image $v$ may be a picture, such as a photo, as for input image $u$, or a texture, e.g. artificially defined/computed or synthetized/derived from a photo. Said photo may be captured by a camera. And as for input image $u$, texture image $v$ may be a grey-level image or a color image, such as an RGB image, any format being contemplated by the method. If texture image $v$ is a color image such as an RGB image, then applying to input image $u$ a texture that is a function of texture image $v$ amounts to applying the colors of $v$ to the contours of $u$ in basically the same quantities and with the same granularity, as mentioned earlier, which implies that the output image may advantageously be determined as a color image, such as an RGB image, to respect user-intent.

More specifically, the method considers a mean and a covariance that are a function of texture image $v$. In other words, the mean and the covariance take values that may be obtained via a given function taking texture image $v$ as input. An example of such function is discussed more extensively later. As for texture image $v$, said mean and said covariance are not necessarily provided in the method, as long as the constraint involving them is respected by the determining S20. Thus, texture image $v$ itself, the mean and the covariance are all data not necessarily provided or computed explicitly in the method. In general, the method takes an input that is a function of $v$ (said input may be the result of applying a process to texture image $v$), that conveys information regarding said mean and covariance and that corresponds to materialized data. An example is discussed more extensively later.

Yet more specifically, the determining S20 outputs an image noted $w^*$ (and thus called "output image") that respects the constraint that the average and the periodical autocorrelation of the output image are equal to the above-mentioned mean and the covariance. Respecting such a constraint ensures that a texture corresponding to texture image $v$ is indeed applied when outputting image $w^*$. Indeed, the considered mean and covariance are related to the average and periodical autocorrelation of the output image, in the sense that the mean and the average are of the same dimension and the covariance and the periodical autocorrelation are of the same dimension (the mean and the covariance are defined in abstract, whereas the average and the periodical autocorrelation are values taken from a specific image), and more specifically the mean and covariance define desired values for the average and the periodical autocorrelation. Thus, the mean and the covariance constrain output image $w^*$ so as to guarantee that a texture derived from texture image $v$ is applied. Thus, the optimization program explores images whose average is equal to the value of the mean and whose periodical autocorrelation is equal to the value of the covariance.

The mean, as known *per se* from image processing, is a value indicative of an average level of grey in the case of a grey-level image, or a vector indicative of an average level of each of the canals in the case of a color image (thus, a vector of dimension 3 in the case of an RGB image). As for the covariance, as known *per se* from image processing in the case of a grey-level image, it is defined, for each pixel of a considered image, as a value indicative of the covariation of the level of grey between every pair of pixels that can be derived from each other by the translation of the vector equal to the value of the position of said pixel relative to the predetermined origin (usually either top left pixel, or center of the image pixel).

In the case of a color image, the covariance and periodical autocorrelation define the variability of the colors within an image, pixel-by-pixel, although the periodical autocorrelation is not defined by a widely spread formula. In the case of the method, the periodical autocorrelation is defined periodically over the domain of *v*, by a specific formula, in the case of a color image such as an RGB image. The formula is explained below. It is now noted that the use of the specific formula described below allows a higher quality of the result in the specific case that the texture image *v* is an RGB image and the output image *w** is determined as an RGB image. Indeed, the specific formula implemented by the method to respect the constraint allows, in this case, that the texture of *v* is applied while keeping key statistical characteristics from the distribution of color values of *v*. The formula of the periodical autocorrelation defines a matrix of dimension 3x3 for each pixel and takes into account inter-canal cross values, thereby ensuring a better result than a direct application of grey-level texture transfer to color images, as will be apparent from the below explanations. On the contrary, a direct application to the case of RGB images of the definition of the periodical autocorrelation in the case of a grey-level image would yield a vector of dimension 3 for each pixel with the formula of the periodical autocorrelation of the grey-level case reproduced three times for each canal of the RGB image.

In the example of the method discussed right above, the periodical autocorrelation of an RGB image *s* of dimension $N_1 \times N_2$ and of average $m_s$ is defined for each pixel of coordinates $x_1$ and $x_2$ of the RGB image *s* precisely as:

$$\Gamma_s(x_1, x_2) \;=\; \frac{1}{N_1 N_2} \sum_{x'_1, x'_2} (s(x_1 + x'_1, x_2 + x'_2) - m_s)(s(x'_1, x'_2) - m_s)^{\mathrm{T}}.$$

Given an image *s* defined on domain $\{0, ..., N_1 - 1\} \times \{0, ..., N_2 - 1\}$, the method defines its (empirical) average by:

$$m_s \;=\; \frac{1}{N_1 N_2} \sum_{x'_1, x'_2} s(x'_1, x'_2).$$

In the case of grey-level image, $s(x_1, x_2)$ is a real number. $\Gamma_s$ is a real function, $\Gamma_s(x_1, x_2)$ is a real number, defined on domain $\{0, ..., N_1 - 1\} \times \{0, ..., N_2 - 1\}$ by:

$$\Gamma_s(x_1, x_2) \;=\; \frac{1}{N_1 N_2} \sum_{x'_1, x'_2} (s(x_1 + x'_1, x_2 + x'_2) - m_s)(s(x'_1, x'_2) - m_s)^{\mathrm{T}},$$

where, in the arguments of *s*, $x_1 + y_1$ is defined modulo $N_1$ and $x_2 + y_2$ modulo $N_2$. It is noted that (modulo $N_1$ and $N_2$) the symmetrical relation $\Gamma_s(N_1 - x_1, N_2 - x_2) = \Gamma_s(x_1, x_2)$ holds.

Now, in the case of an image *s* in RGB colors: $s(x_1, x_2)$ is a real vector (column vector by convention) of size 3 (indexed by channels {R, G, B}). $\Gamma_s$ is a function with matrix values, $\Gamma_s(x_1, x_2)$ is a symmetric square matrix of size 3, defined on domain $(0, ..., N_1 - 1) \times \{0, ..., N_2 - 1\}$ by:

$$\Gamma_s(x_1, x_2) \;=\; \frac{1}{N_1 N_2} \sum_{x'_1, x'_2} (s(x_1 + x'_1, x_2 + x'_2) - m_s)(s(x'_1, x'_2) - m_s)^{\mathrm{T}}.$$

where $a^{\mathrm{T}}$ designates the transpose of vector *a* and where the considered product is the matrix product (each term is a

$3 \times 3$ matrix, as the product of a $3 \times 1$ matrix by a $1 \times 3$ matrix). It is again noted that (modulo $N_1$ and $N_2$) the symmetrical relation $\Gamma_s(N_1 - x_1, N_2 - x_2) = \Gamma_s(x_1, x_2)$ holds.

The formula of Wiener-Khinchin is also discussed now in relation to the fact discussed later that the optimization program may advantageously be solved in an example with Fourier analysis, as said Wiener-Khinchin formula links the Fourier transform of an image signal to the Fourier transform of the periodical autocorrelation of the signal. Specifically,

$\hat{\Gamma}_s(0,0) = 0$ and for each $(x_1, x_2) \neq (0,0)$: $\widehat{\Gamma}_s(x_1, x_2) = \hat{s}(x_1, x_2)\overline{\hat{s}(x_1, x_2)^{\mathrm{T}}}$, which implies that the Fourier transform of the periodical autocorrelation of an RGB image has the particularity of being a 3x3 Hermitian matrix, of rank 1 at each frequency. It is noted that $\hat{s}(0,0) = \sqrt{N_1 N_2} m_s$ for the unitary definition of the discrete Fourier transform.

The constraint of the optimization program has been discussed. The objective function of the optimization program is now discussed. Specifically, the method determines at S20 output image $w^*$ as a solution of an optimization

program equal to: $\underset{w}{\mathrm{argmin}} \| \beta \cdot w - \alpha \cdot u \|$, wherein $\|\cdot\|$ is a predetermined distance and/or norm. The determining S20 solves this program in any computerized way, and an example based on Fourier analysis is provided later. Such a program ensures that it is indeed to the contours of input image $u$ that the texture is applied, thereby ensuring quality of the result. The solution of the optimization program is unique in the case where the dimension of output $w^*$ is inferior or equal to the dimension of input $u$ (under the assumption that there is no zero coefficients in the Fourier transform of $u$). This can be proven. Otherwise, any way to handle non-uniqueness may be contemplated, including ways involving user-interaction.

In the above program, $\alpha$ and $\beta$ are predetermined luminance vectors respective to input image $u$ and to the texture image $v$. A luminance vector is the vector of intensities corresponding to each color channel of an image, equal to 1 in the case of a grey-level image, or alternatively of size 3 in the case of an RGB image. Typically, a standardized value is provided to transform an RGB image in a grey-level image. For example, the method may contemplate NTSC weights. Luminance vectors $\alpha$ and $\beta$ are respectively related to the input image $u$ and to the texture image $v$. Thus, $\alpha$ measures how the weights are put on the colors of $u$, and respectively $\beta$ measures how the weights are put on the colors of $v$. Luminance vectors $\alpha$ and $\beta$ are not necessarily equal, notably if $u$ and $v$ are not of the same kind (e.g. one is RGB - typically $v$ - and the other one is grey-level - typically $u$). However, luminance vectors $\alpha$ and $\beta$ may be equal, and in the case both are RGB images, this may ensure that colors of both images are interpreted in the same way. The luminance vectors may be parameterizable by the user. This allows manual adaptability of the weight put on a given channel. Luminance vectors $\alpha$ and $\beta$ allow the optimization program to be written in only one dimension and thus to be solved at once (instead of a solving canal-by-canal), which avoids introduction of colors not included in $v$ in the case that $v$ is a color image such as RGB and output $w^*$ is also a color image such as RGB. This ensures a relatively high quality of the result.

The predetermined distance noted $\|\cdot\|$ may be the quadratic distance. In other words, the predetermined distance may correspond to the $L^2$ norm. Such a distance allows solving the optimization program efficiently with Fourier analysis, as such distance is maintained when switching to Fourier frequencies (it is referred to Parseval formula for a proof). Specifically, the determining S20 of the output image $w^*$ may comprise determining the Fourier transform of the solution of the optimization program (which amounts to solving the optimization problem in the Fourier frequency domain) and then inverting said Fourier transform of the solution of the optimization program. Thus, the method reformulates the optimization program with the Fourier transform of the variables. Solving the optimization program in the Fourier domain makes the method very fast. Indeed, as exemplified later, the method may perform in $O(N_1 x N_2 * \log[N_1 x N_2])$, with $N_1 x N_2$ the number of pixels of the output image $w^*$.

In an example, the mean and the covariance, to which the average and the periodical autocorrelation of the output image are constrained to be equal to in the optimization program, are respectively the average and the periodical autocorrelation of a so-called "texturing image", noted $v'$. Texturing image $v'$ is a function of texture image $v$. Texture image $v$ provides the substantial texture to be applied to input image $u$. However, the method of the example conceptually transforms texture image $v$ into another image, that is, texturing image $v'$, via a process/function such that the texture applied to input image $u$ actually stems out of texturing image $v'$, which thus "textures" input image $u$. For that, the Fourier transform of texturing image $v'$ (noted $\hat{v}'(y)$ for each frequency $y$) is determined for the method to be performed by solving the optimization program with Fourier analysis. For example, $\hat{v}'(y)$ is predetermined. Indeed, just like $v$, the mean and the covariance need not necessarily be provided, texturing image $v'$ also need not necessarily be provided, as long as its Fourier transform $\hat{v}'(y)$ can be provided. However, texturing image $v'$ may be provided and its Fourier transform may be predetermined or not, the Fourier transform being determined/computed in the method in the latter case. Texturing image $v'$ is an intermediate image derived from texture image $v$ (since $v'$ is a function of $v$) that allows adjusting/preparing $v$ before applying its texture to $u$. Thus, texturing image $v'$ allows a refining of the method, thereby increasing quality.

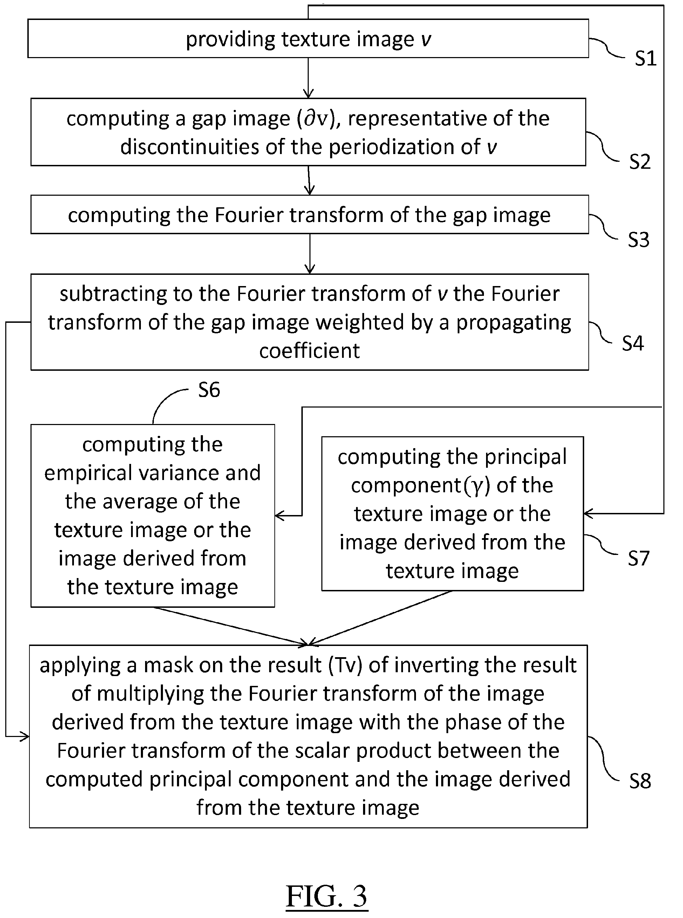

Different types of adjustments are discussed below with reference to the flowchart of FIG. 3.

As mentioned above, texturing image *v'* may be provided, for example by being retrieved from a database, e.g. local to the system or remote on server. This allows viewing, by the user, e.g. on a screen of the system, texturing image *v'* before applying its texture to input image *u*. The user may thus select such texturing image *v'*. This improves user-experience. Thus, aside the method for image texturing of FIG. 1, it is also proposed a method for processing texture image *v* into texturing image *v'*, thereby achieving a preprocessing for the method for image texturing. Said preprocessing may comprise different transformations of texture image *v* leading to texturing image *v'* that may be combined and that are discussed later. Said preprocessing may further comprise a step of storing the obtained texturing image *v'* on a database, e.g. local to the system or remote on a server, such that texturing image method for image texturing *v'* may later be retrieved for the method for image texturing to be implemented. Thus, the preprocessing may be part of the method for image texturing, prior to the providing S10, such that texturing image *v'* may be provided concomitantly to the providing S 10 of input image *u*. It is however noted that the preprocessing is independent from the rest of the method for image texturing, such that the method of FIG. 1 may be "blind" to the preprocessing, only knowing *v'* as an input. Indeed, the preprocessing and the rest of the method may even be performed on different systems (however possibly of the same kind), and for example, the result of the preprocessing (i.e. texturing image *v'*) may be sent to the system later implementing S10 and S20 of the method of FIG. 1.

An example of the method for image texturing where the optimization program is solved in the Fourier frequency domain, as explained above, and where the method for image texturing comprises the preprocessing discussed above is now discussed.

First of all, an example of the preprocessing is discussed with reference to FIG. 3.

In the example of FIG. 3, texturing image *v'* corresponds to the result of compressing S6-S8 an image (later noted *ve*) derived from texture image *v*. This means that texturing image *v'* is the result of processing an image derived from texture image *v* that takes (at least statistically) less memory space than the image derived from texture image. As a result, such preprocessing allows a better handling of hardware resources. Notably, as mentioned earlier, the method may be included in a global solution where the user is offered for selection different textures to apply on input image *u*. By storing texturing images *v'* which correspond to compressions of the textures instead of the textures themselves, the method enhances this global solution by allowing a better control of the memory. The compression is performed under the constraint that the Fourier transform of texturing image *v'* is substantially equal to the Fourier transform of the image derived from texture image *v* modulo a multiplication by a given phase. In other words, the Fourier transforms are equal modulo a given de-phasing (which is generally not the same for all frequencies). Substantial equality here designates equality modulo some noise, unperceivable to the user, as understood to the skilled person in the context of Gaussian textures. For example, two Fourier transforms are said to be substantially equal if the relative $L^2$ distance between them is inferior to a predetermined threshold, for example 20%. Such a preprocessing ensures that, although information may be lost when compressing the data, the result of the image texturing is substantially the same.

The compressing is performed on an image derived from texture image *v*, and said derivation can be any one according to the purpose of the method. In an example, the image derived from texture image *v* is texture image *v* itself. In the example of FIG. 3, the image derived from texture image *v* is the result of a first stage S1-S4 of the pre-processing referred to in the following by its purpose of "elimination of the artifacts", and performed prior to the compressing S6-S8. Thus, the expression "an image derived from texture image *v*" designates any image that is a function a texture image *v*, including *v* itself. Also, the image derived from texture image *v* is not necessarily provided, which is why it is said in general terms that the compressing corresponds to the result of compressing said image derived from texture image *v*. Indeed, the compression is virtual when the image to be compressed is not actually provided.

In the example of FIG. 3, the compressing includes computing S6 the empirical variance and the average of texture image *v* or the image derived from the texture image, and computing S7 the principal component, noted $\gamma$, of texture image *v* or the image derived from the texture image. Computing S6 and S7 provide values that are to be used in the compression. As known to the skilled person, the empirical variance of a color image is a 3 x 3 matrix, indicative of the variance of each canal but also of the covariance of cross-canal terms. Also, as known to the skilled person, principal component $\gamma$ is the highest eigenvalue of the empirical variance. The empirical variance is the matrix value of the periodical autocorrelation at pixel coordinates (0,0), also known as spatial origin. In a straightforward and simple implementation, the empirical variance, the average and the principal component $\gamma$ may be computed on the image derived from texture image *v*, if it is provided and as it is the input of the compression. However, any or all of values may alternatively be computed based on texture image *v* itself, before it is submitted to the elimination of artifacts, or if a duplicate of *v* is temporarily stored until the preprocessing is ended. This allows an eventual image texturing closer to the application of a texture corresponding to *v* itself, thereby better respecting the initial data.

The compressing of the example of FIG. 3 then comprises applying S8 a so-called mask on an image noted T*v*, and called "texton", and which is the result of other operations (which may be performed or not, as long as their result is somehow provided). Applying a mask to texton T*v* means selecting values of texton T*v* in order to keep values around the spatial origin that are most relevant to texturing (*e.g.* inside a square domain centered at the spatial origin), adjusting the result by a constant (*e.g.* the mean of the remaining values outside of the square domain), thereby leading to image $v_c$, such that $v_c$ has an average optimally close to 0 at its borders, and smoothing the border values (*e.g.* by multiplying the values by a smooth function vanishing outside of the square domain). It is noted that for a grey-level image, the compression may further discard half of the coefficients because each coefficient has a symmetric (*i.e.* the compression may discard symmetric duplicates).

Tv is the result of inverting the result, noted $\widehat{Tv}$ (y), of multiplying the Fourier transform of the image derived from the texture image with the phase of the Fourier transform of the grey-scale image that results from the scalar product between computed principal component $\gamma$ and the image derived from the texture image, which is equal to

$\widehat{ve}(y)\dfrac{\overline{\gamma \widehat{ve}(y)}}{|\gamma \widehat{ve}(y)|}$, with the notation ve to designate the image derived from the texture image *v*, for example after the elimination of the artifacts.

Thus, the compression of the example computes, when texture image *v* is an RGB image, the empirical average of *v* and $\Gamma_v(0)$ the empirical variance of *v* (3 x 3 matrix). Also, the compression computes the principal component of *v* as the eigenvector of $\Gamma_v(0)$ of highest eigenvalue. Doing that, the compression of the example performs orthogonal diagonalization of $\Gamma_v(0)$ : $\Gamma_v(0) = P_v D_v P_v^T$, with $D_v$ diagonal and $P_v$ orthogonal (which amounts to performing principal component analysis on *v*). In the case of a grey-level image, the compression may do nothing at this level. The compression then computes $\widehat{ve}$, the Fourier transform of the image ve derived from texture image *v*, if it is provided in space, or nothing if *ve* is provided in Fourier, and also computes $\widehat{Tv}$. This first step toward *v'* amounts to:

$\widehat{Tv}(y) = \hat{v}(y)\dfrac{\overline{\gamma\hat{v}(y)}}{|\gamma\hat{v}(y)|}$ for color images, and to $\widehat{Tv}(y) = |\widehat{ve}(y)|$ for grey-level images. The compression then computes Tv (texton of *v*) by inverse Fourier transform, as explained earlier. This is the image optimally concentrated around the spatial origin, among images with periodical autocorrelation $\Gamma_v$.

Now, keeping in mind that the determining S20 considers the optimization program

$\underset{w}{\arg\min} \| \beta \cdot w - \alpha \cdot u \|$, and owing to the explanations coming later, texturing image *v'* has to be of the same dimension as (input) image *u* (which may itself result from a re-dimensioning of an initial image *u* as mentioned earlier). Moreover, texturing image *v'* may be wanted to be such that *v* and *v'* have identical average and empirical variance. Thus, $v_c$ obtained earlier may constitute texturing image *v'* as such, but it may also be submitted to a re-dimensioning, and/or an average and empirical variance equalization, possibly prior to the storing, or after the storing prior to the image texturing.

The re-dimensioning may comprise adding $v_c$ (which is centered at the spatial origin) to a constant image (with a value computed such that it minimizes the average distance to the values of the borders of $v_c$) of a given dimension: this image is noted $v_c'$. In case no re-dimensioning is performed, $v_c'$ denotes $v_c$

The average and empirical variance equalization may comprise computing the average value $m_{v_c'}$ and the empirical variance $\Gamma_{v_c'}(0)$ and then diagonalizing said empirical variance: $\Gamma_{v_c'}(0) = P_{v_c'}D_{v_c'}P_{v_c'}^T$. Then, the average and empirical variance equalization may compute the empirical variance equalization matrix $\Theta = P_v D_v^{\frac{1}{2}}D_{v_c'}^{-\frac{1}{2}}P_{v_c'}^T$.

Finally, the average and empirical variance equalization may output *v'* by applying a same affine transform to all its

points: $v'(y) = m_v + \Theta(v_c'(y) - m_{v_c'})$.

Now, in relation with the image texturing itself and presented with reference to FIG. 1, it is noted that predetermined luminance vector respective to the texture image $\beta$ may be selected to be equal to principal component $\gamma$ computed during the compression. Interestingly, this specific choice improves the quality of the result, taking into account the compression. Specifically, the choice $\beta = \gamma$ is advantageous because, this way, in the optimization program, more weight is given in the texture to the direction of colors with the highest variance. The contours to be projected are thus optimally imprinted in the final result.

In the example of FIG. 3, texturing image *v'* also corresponds to the result of processing the borders of an image derived from the texture image to join them. This is the "elimination of the artifacts" mentioned earlier and performed in steps S1-S5 in the example of FIG. 3. Indeed, processing the borders of a given image to join them amounts to modifying the given image such that it substantially keeps the same information (e.g. above 90% of the information of the given image is kept) in a way that the periodization of the given image has a predetermined continuity (i.e. when sticking several copies of the given image one to each other, there is no visible discontinuity), e.g. C0, C1 or even C2 continuity. This avoids the introduction of visual artifacts when taking the Fourier transform of the given image, which is significant notably in the case where the given image has an intrinsic continuity, e.g. when the given image is a picture such as a photograph.

In the example of FIG. 3, the elimination of the artifacts is performed on texture image $v$ directly, such that the image derived from the texture image of which borders are processed is texture image $v$ itself. This implementation is the most efficient in terms of quality reached (i.e. elimination of artifacts while keeping the information of texture image $v$ for the eventual image texturing). Also, it is again noted that the elimination of artifacts and the compression need not necessarily be both performed, nor performed at all.

In the example of FIG. 3, the method actually comprises only part the processing of the borders of the image derived from texture image to join them. Indeed, as can be seen on FIG. 3, texture image $v$ is processed in steps S1-S4 to eliminate artifacts, but the result in space is not provided. Instead, the result in Fourier is directly fed to the compression, and more precisely to the application S8 of a mask of the compression. In fact, it is noted that steps S6 and S7 of the compression need not necessarily be performed after the elimination of the artifacts, but can be performed before or simultaneously. This way, time is saved as it is the Fourier result that is used when performing the compression. In the case the method does not comprise the compression after the elimination of the artifacts also, the elimination of the artifacts does not need to output an image in space, but can output the result in Fourier only if desired. This way, time is saved as it is the Fourier result that is used when performing the image texturing in Fourier, as mentioned earlier and as more extensively discussed later. However, alternatively or additionally, and notably in the case the compression is not performed, the result of the elimination of the artifacts in space (which may be obtained by a simple Fourier inverse on the result of S4) may also be stored, notably to help the user select and view the texturing image to be applied.

In any case, the processing of the borders of the image derived from texture image to join them includes in the example of FIG. 3 steps S2-S4, which are now discussed. After texture image $v$ is provided at S1, the elimination of the artifacts comprises computing S2 a so-called "gap image", noted $\partial v$, which is an image representative of the discontinuities of the periodization of the image derived from the texture image (i.e. texture image $v$ itself in the example). In other words, texture image $v$ is first, at least conceptually, periodized (i.e. an image consisting of several copies of texture image $v$, e.g. virtually an infinity, attached together by their borders is created). And then an image that conveys information about the discontinuities related to the periodization (that is, at the joined borders) is determined. An example of how to do so is provided later. The elimination of the artifacts of the example then also includes computing S3 the Fourier transform of the gap image. Finally, in the example, the elimination of the artifact then includes subtracting S4 to the Fourier transform of the image derived from the texture image (that is, texture image $v$ itself in the example) the Fourier transform of the gap image weighted by a propagating coefficient. The propagating coefficient is a weight that ensures that the smoothing of the borders performed by the subtracting S4 does not introduce artifacts/discontinuities in the interior of the image These propagation coefficients can be computed such that the final pre-processed image is the solution of a simple optimization program (e.g. an energy function taking into account border discontinuities and smoothness inside the domain, under the constraint that the mean is equal to zero). Then, the result may be provided to the compression discussed earlier, possibly after a final adjustment of Fourier thereby obtained such that its corresponding spatial image has the same empirical variance (should it be the case) as texture image $v$. This adjustment can be performed by applying a same affine transform to all RGB coefficients of the result image as discussed *supra.*

An example of the elimination of the artifacts is now discussed more extensively, in a case of a rectangular image, with the below notation $v1$ representing the discontinuities for the vertical borders, and $v2$ representing the discontinuities for the horizontal borders. This example ensures that relatively little information is lost. In the explanations related to the example, each color canal is processed independently of the others, should it be the case, and a grey-level texture image $v$ on a domain of dimension $N_1 \times N_2$ is thus considered for the sake of simplicity. By convention the image is indexed on domain $\{0, ..., N_1 - 1\} \times \{0,...,N_2-1\}$.

First, gap image is computed $\partial v = \partial v_1 + \partial v_2$, characterized by $\partial v(x) = 0$ outside the minimal width band (e.g. 2 pixels) at the borders, and, inside the band, by $\partial v_1(0,x_2) = v(N_1 - 1, x_2) - v(0, x_2)$ and $\partial v_1(N_1 - 1, x_2) = v(0, x_2) - v(N_1 - 1, x_2)$ for all $x_2$ in $\{0,...,N_2-1\}$ ($\partial v_1 = 0$ anywhere else), and $\partial v(x_1, 0) = v(x_1,N_2-1)-v(x_1,0)$ and $\partial v(x_1,N_2 -1) = v(x_1, 0)-v(x_1, N_2-1)$ for all $x_1$ in$\{0,...,N_1-1\}$ ($\partial v_2 = 0$ anywhere else). Then, the elimination of the artifacts computes $\widehat{\partial v}$ (respectively $\hat{v}$) the discrete Fourier transform of $\partial v$ (respectively $v$).

It is noted that to compute the discrete Fourier transform of $v$ (the following applying *mutatis mutandis* to other images), the Fourier transform of each of the color canals of $v$ has to be computed. If $v$ is an RGB image and is of dimension $N_1 \times N_2$, the Fourier transform of the red canal (for example) is provided by:

$$\hat{v}_R(y_1, y_2) = \frac{1}{\sqrt{N_1 N_2}} \sum_{x_1, x_2} v_R(x_1, x_2) \exp(i2\pi(\frac{x_1 y_1}{N_1} + \frac{x_2 y_2}{N_2})).$$

It is also noted that $\frac{1}{\sqrt{N_1 N_2}}$ is often omitted inimplementations, but then added in the Fourier inversion.

Then, the computing of image ve is provided by its Fourier transform (to be fed to the compressing):

$$\widehat{ve}(x_1, x_2) = \hat{v}(x_1, x_2) + \frac{\widehat{\partial v}(x_1, x_2)}{4 - 2[\cos(2\pi x_1/N_1) + \cos(2\pi x_2/N_2)]}$$

Another option to eliminate the artifacts, that may be called "brutal", is now discussed. This other option is different from the one followed on FIG. 3. Basically, this option performs a flattening of the borders. This other option is practical for the re-dimensioning discussed above. This other option computes the spatial average:

$m_v = \frac{1}{N_1 N_2} \sum_x \quad v(x).$ Then, this other option chooses a border width $\in$ (in practice, a few pixels, e.g. 2 or 3).

Then, the other option chooses a smooth function (at least derivable) g: [0,1] → [0,1] such that g(0) = 0, g(1) = 1 and g'(0) = g'(1) = 0. Then, the other option processes a band $B_\in$ of width $\in$ of pixels at the borders of the domain defined by distance ($l_1$) at the borders defined by d($x_1$,$x_2$) = min{$x_1$; $N_1$ - 1 - $x_1$ ; $x_2$ ; $N_2$ - 1 - $x_2$} by $B_\in$ = {($x_1$, $x_2$); d($x_1$,$x_2$) < $\in$/2} = {($x_1$, $x_2$); $x_1 \le \in$ or $x_1 \ge N_1$ - 1 - $\in$ or $x_2 \le \in$ or $x_2 \ge N_2$ - 1 - $\in$}. Finally, the computing of image ve (to be fed to the compressing) is provided by:

$$ve(x_1, x_2) = [1 - g(\frac{d(x_1, x_2)}{\epsilon})]m_v + g(\frac{d(x_1, x_2)}{\epsilon})v(x_1, x_2).$$

Now, an example of the determining S20 is discussed. In this example, the optimization program is solved in the Fourier frequency domain. Input image u is thus already provided (i.e. S10 may be performed as described earlier), and the Fourier transform $\hat{v}$ of texturing image v' is provided, such that ($\hat{v}$(y)) is known for each spatial frequency y. $\hat{v}$ may be the result of any option of the example of the preprocessing described above, such that the determining S20 of the example may be fed with the result of FIG. 3. And it is considered that u and v' have the same dimension, having possibly undergone appropriate re-dimensioning.

In this example, determining the Fourier transform of the solution of the optimization program comprises, for each frequency y, rotating uniformly each channel of the Fourier transform v'(y) of texturing image v' in a particular way that achieves the required optimization in Fourier, thereby leading to the desired result (modulo Fourier inversion). "Rotating uniformly each channel" means that a uniform rotation is performed for each channel frequency, but that the rotations are independent from one channel to another. The adverb "uniformly" is here to indicate that the same angle of rotation is applied for each color channel, which is mostly relevant in the case texturing image v' is a color image such as an RGB image. This minimizes the introduction of colors not present in texturing image v' mentioned above.

In specific, the rotation is performed to align in the complex plane, the Fourier transform, equal to $\beta \cdot \hat{v}'(y)$, of the scalar product between texturing image v' and predetermined luminance vector $\beta$ respective to texture image v and the Fourier transform, equal to $\alpha \cdot \hat{u}'(y)$, of the scalar product between input image u and its respective predetermined luminance vector $\alpha$. It is noted that the Fourier transform of the texturing image v' has, for each pixel, three complex components in the case of an RGB image v' and one complex component in the case of grey-level image v'. Also, it is known that the Fourier transform of a pixel image is a pixel image of identical dimensions with complex values. The Fourier transforms are thus aligned in the complex plane. The Fourier transform being linear and $\alpha$ and $\beta$ being a vectors of scalars, the Fourier transforms that are aligned respect the indicated equalities. Such a specific rotation allows respecting the constraint on the periodical autocorrelation of the optimization program, and thereby achieves the contemplated quality of the image texturing in a fast way.

In an example discussed below, of simple implementation and efficient execution, rotating uniformly each

channel of $\hat{v}'(y)$ comprises multiplying $\hat{v}'(y)$ with the complex exponential of the difference between the phases of $\alpha \cdot \hat{u}'(y)$ and $\hat{v}'(y)$.

First, the Fourier transforms of the periodic components $v'_R$, $v'_G$ et $v'_B$ corresponding to the result of processing the borders of texture image $v$ and relative to the canals $v_R$, $v_G$ et $v_B$, are directly provided. Then, the image texturing of the example computes $\varphi_{v,\alpha}$, the $\alpha$-phase of $v$: a given vector $\alpha$ is considered in the RGB space, and the grey-level image $v_\alpha$ is considered, its Fourier transform being: $v_\alpha(y_1, y_2) := \alpha_R \hat{v}_R(y_1,y_2) + \alpha G \hat{v}_G(y_1,y_2) + \alpha_B \hat{v}_B(y_1,y_2) : r_v(y_1, y_2)$ exp $(i\varphi_{v,\alpha}(y_1,y_2))$. Then, the method of the example computes $\hat{u}_\alpha$, the Fourier transform of $u_\alpha := \alpha_R u_R + \alpha_G u_G + \alpha_B u_B$ (grey-level image), where $\alpha$ is the predetermined luminance vector in the RGB space, and the $\alpha$-phase of $u$, $\varphi_{u,\alpha}$ by: $\hat{u}_a(y_1, y_2) = r_u(y_1,y_2)\exp(i\varphi_{u,\alpha}(y_1,y_2))$.

In the case where the dimension of $u$ and $v$ is $N_1 \times N_2$, the method of the example computes the Fourier transform of the output $w*$ (RGB image) by:

$$\widehat{w*}(y_1, y_2) = \hat{v}(y_1, y_2)\exp(i(\varphi_{u,\alpha}(y_1, y_2) - \varphi_{v,\alpha}(y_1, y_2)))$$

where $\hat{v}(y_1,y_2)$ is a complex vector of dimension 3 and $\exp(i(\varphi_{u,\alpha}(y_1,y_2)-\varphi_{v,\alpha}(y_1,y_2)))$ a unitary complex number. It is noted that one way to interpret this formula is to say that $\hat{w} = \widehat{T_\alpha(v)}\exp(i(\varphi_{u,\alpha}(y_1, y_2)))$ where $T_\alpha(v)$ is the $\alpha$-texton of $v$.

The method of the example may then be ended by inverting each of the RGB canals of $\widehat{w*}$. It is noted that if $w$ is of dimension $N_1 \times N_2$, the Fourier inverse of the red canal (for example) is:

$$w_R * (x_1, x_2) = \frac{1}{\sqrt{N_1 N_2}} \sum_{y_1, y_2} \widehat{w}_R(y_1, y_2)\exp(-i2\pi(\frac{x_1 y_1}{N_1} + \frac{x_2 y_2}{N_2})).$$

modulo factor $\frac{1}{\sqrt{N_1 N_2}}$ it was omitted in the Fourier transform (otherwise it is:

$$w_R * (x_1, x_2) = \frac{1}{N_1 N_2} \sum_{y_1, y_2} \widehat{w}_R(y_1, y_2)\exp(-i2\pi(\frac{x_1 y_1}{N_1} + \frac{x_2 y_2}{N_2})).$$

For the sake of comprehensiveness, it also note that each canal of $w*$ may then be quantified (in general in 8 bits).

In an example, the image texturing may further implement an option in order to provide more flexibility, possibly requested via user-interaction. Specifically, the Fourier transform of the texturing image $\hat{v}'(y)$ may be further processed by applying a frequency filtering. This frequency filtering may be requested and parameterized by the user. This allows adaptability of the texturing to the user requirements. "Processing $\hat{v}'(y)$ by applying a frequency filtering" does not mean that, when solving the optimization program based on $\hat{v}'(y)$, it is actually a filtered version of $\hat{v}'(y)$ for some frequencies that is contemplated, said filtered version not necessarily being provided. For example, a low-pass filter is contemplated. Meanwhile, an amount coming from input image $u$ for the filtered frequencies corresponding to the complementary of the filtering may be added to the result.

An example of doing so is now discussed. A transfer function in frequency G is provided defined on $\{0, ...,N_1 - 1\} \times \{0, ...,N_2 - 1\}$ (dimension of the images at stake) with complex values (grey-level case) or within Hermitian matrices of dimension 3, such that $G(N_1 - x_1, N_2 - x_2) = \overline{G(x_1,x_2)}$. Typically, $G(x_1,x_2) = 1_R(x_1,x_2) I_3$ where R is a rectangular domain centered a the spatial origin (or four rectangles at each corner of $\{0,..., N_1 - 1\} \times \{0,..., N_2 - 1\}$). The method applies the transfer function to the Fourier transform of the final image by:

$$\widehat{w'}(x_1, x_2) = G(x_1, x_2)\widehat{w*}(x_1, x_2) + (I_3 - G(x_1, x_2))\hat{u}(x_1, x_2).$$

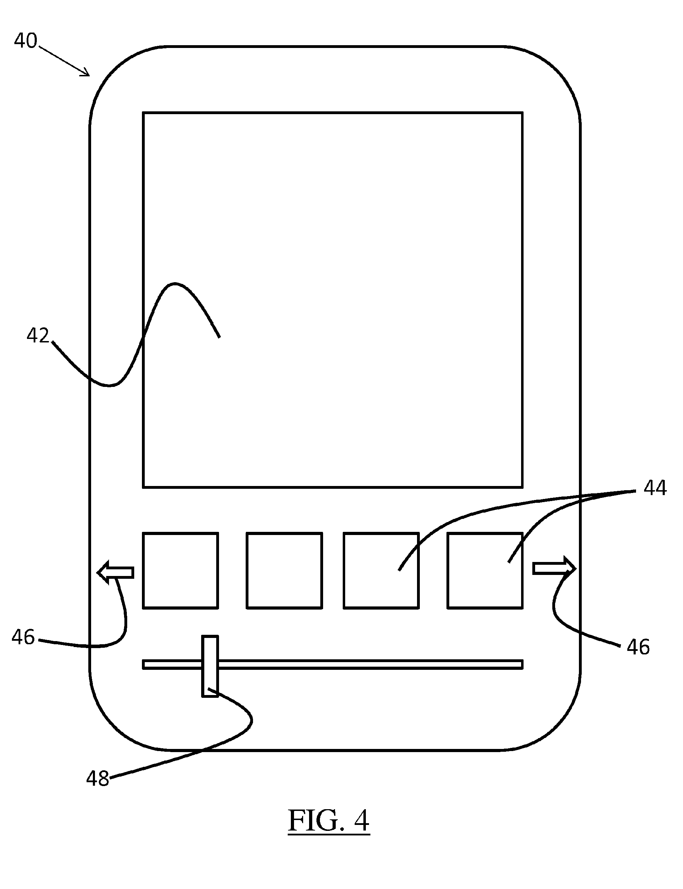

FIG. 4 shows the interface 40 of an example software adapted for performing the method, for example the interface of a mobile device application. With such a software, the user may display picture 42 (which plays the role of input image *u* in the method), for example after capturing picture 42 with a camera of the mobile device or by retrieving it from the image database of the mobile device. The software displays to the user pictures 44 (*e.g.* which may each be a sample of a Gaussian texture derived from a respective image that plays the role of texturing image *v'* in the method). Pictures 44 are thereby a means for the user to retrieve, from a database (remote or local to the mobile device), the texturing image *v'* that the user wants to use when performing the texturing method on picture 42. Displaying pictures 44 as samples of Gaussian textures derived from said texturing images allows a better user experience. However, texturing images *v'* may alternatively be displayed directly. Yet alternatively, pictures 44 may represent a zoom out of the performing of the texturing method on picture 42 with a respective texturing image. Interface 40 also includes arrows 46 for efficiently scrolling the database of pictures 44, and thereby perform the texturing method with the desired texturing image. Any other way of searching the database and retrieving texturing image *v'* to be used may be contemplated. Interface 40 also comprises cursor 48 for adjusting the frequency filtering, such that the method may be performed in Fourier, wherein the Fourier transform of the texturing image $\hat{v}'(y)$ is further processed by applying a frequency filtering. Cursor 48 defines the level of frequency filtering applied.

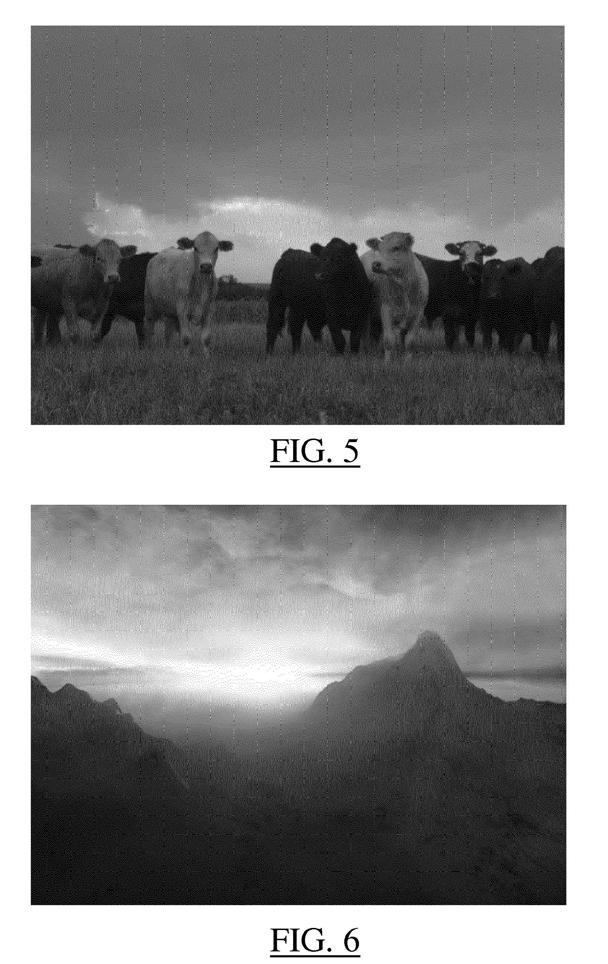

FIGS. 5-14 show examples of RGB images processed by different implementations of the method in Fourier that were tested on a real case. The method was confirmed to perform fast and to lead to satisfying results, as shown by the images provided on FIGS. 5-14.

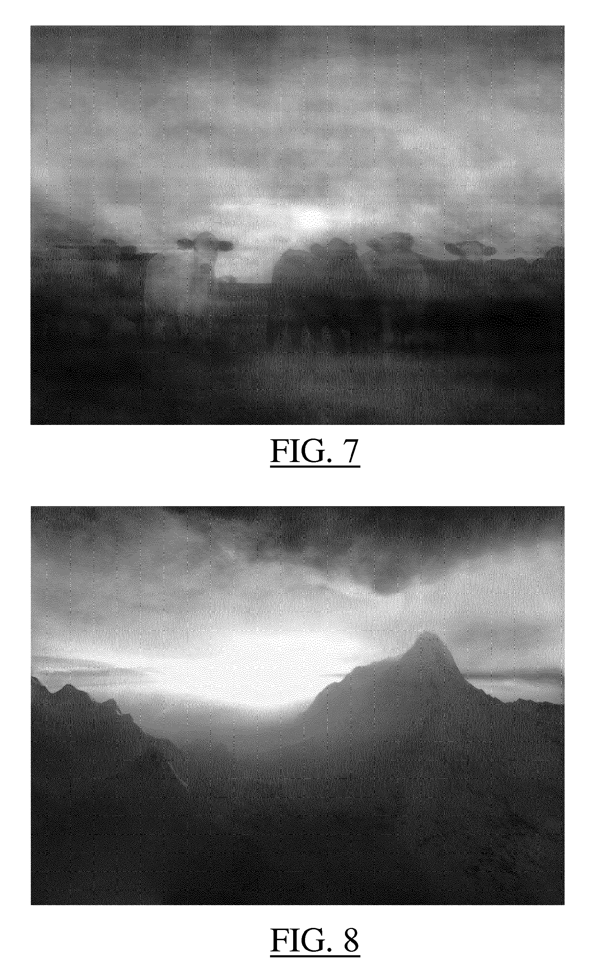

FIG. 5 shows an input image *u*, which is a picture of cows in a field. FIG. 6 shows the texture image *v* to be used in the discussed example of the method to texture input image *u*. As can be seen, texture image *v* is a picture of a sunset behind mountains. FIG. 7 shows the application of the method, using as mean and covariance respectively the average and the periodical autocorrelation of texture image *v* of FIG. 6 directly (i.e. no preprocessing).

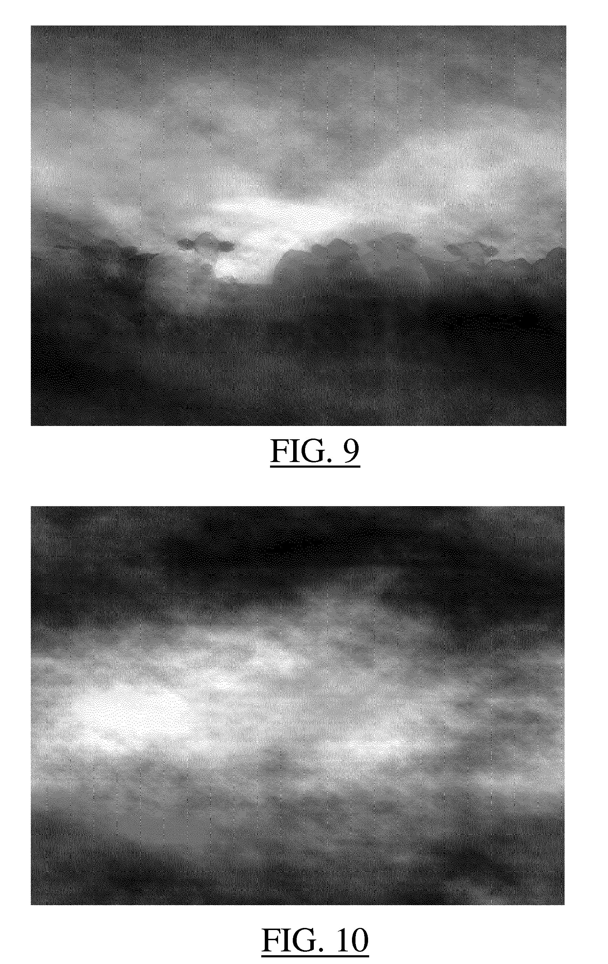

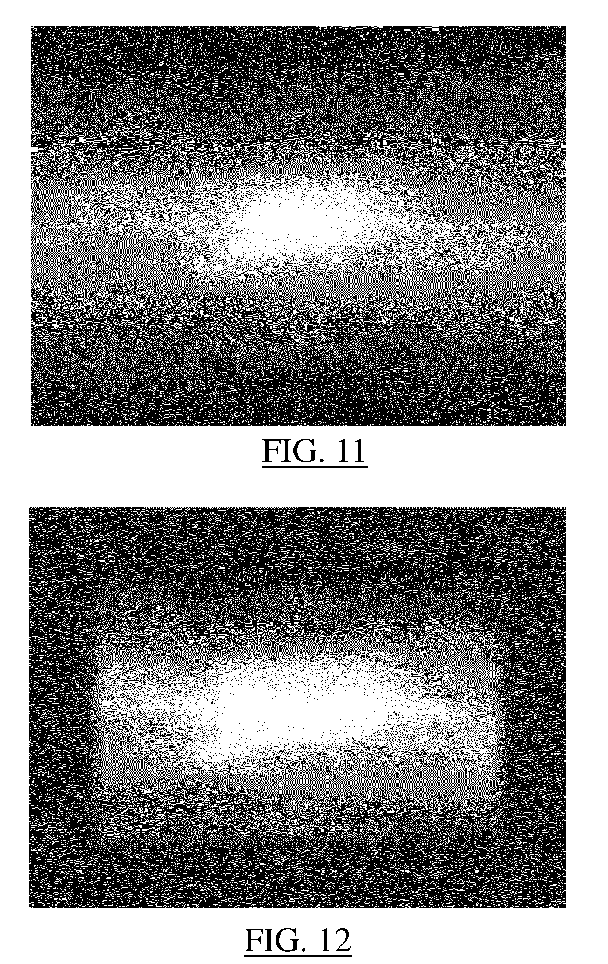

Now, as explained above, the method may comprise preprocessing texture image *v*, and the mean and the covariance, to which the average and the periodical autocorrelation of the output image are constrained to be equal to in the method, are the average and the periodical autocorrelation of a texturing image *v'* that is a function of texture image *v*. FIG. 8 shows an example of texturing image *v'* that corresponds to the result of processing the borders of texture image *v* to join them, as described above with reference to FIG. 3. FIG. 8 shows texturing image *v'* in space, although texturing image *v'* is not necessarily provided, as the method may only determine its Fourier transform $\hat{v}'(y)$. FIG. 9 shows the result of applying the method with the pre-processing and the average and empirical variance equalization leading to texturing image *v'* of FIG. 8. As can be seen, the result is of higher quality than the one of FIG. 7 (*e.g.* the image of FIG. 9 presents less horizontal and vertical noise that the image of FIG. 7). As mentioned above, notably with reference to FIG. 4, in the user-computer interaction texturing image *v'* is actually not necessarily displayed to the user, but rather, a Gaussian texture sample derived from it is displayed. FIG. 10 illustrates such a Gaussian texture sample derived from texturing image *v'* of FIG. 8. As can be seen, the user may thereby have a better hint of the result of performing the method of image texturing on *u* (FIG. 5) with *v'* (FIG. 8). FIG. 11 shows the above-mentioned texton of texturing image *v'*, which may be the data actually stored on the database (instead of texturing image *v'* itself or Gaussian texture of FIG. 10).

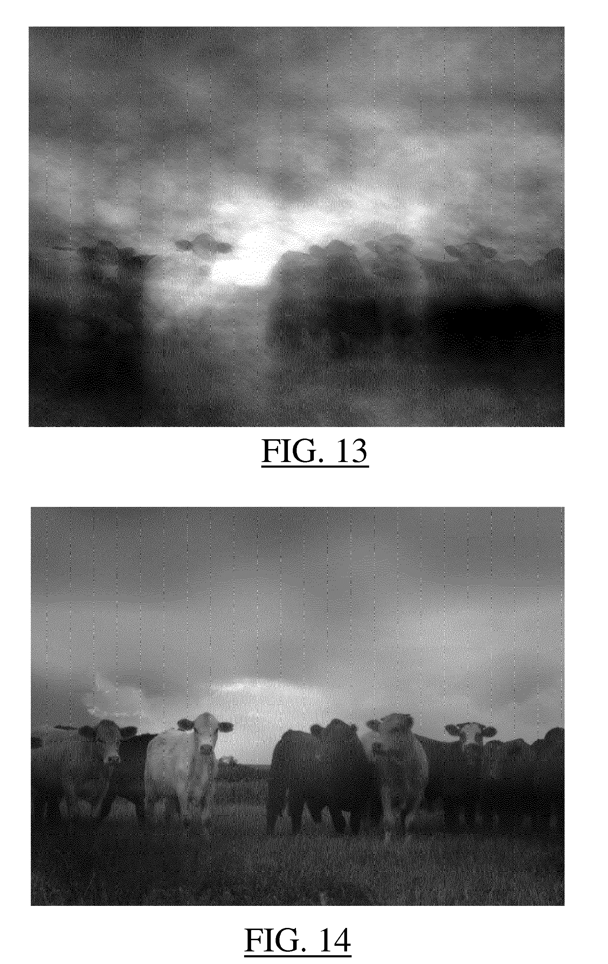

As mentioned earlier, the preprocessing may also comprise a compressing. FIG. 12 shows the resulting texton after compressing texturing image *v'*, performing the re-dimensioning and the average and empirical covariance equalization, according to the example of the method described above with reference to FIG. 3. As can be seen, the compressed texton contains less information that the one of FIG. 11, thereby leading to memory saving, of 50% in the case of the example. However, performing the image texturing method on input *u* of FIG. 5 with the compressed texturing image (i.e. on the basis of the compressed texton of FIG. 12 instead of the texton of FIG. 11) leads to a very satisfying result, as shown on FIG. 13. Indeed, the image of FIG. 13 compared with the image of FIG. 9 leads to a similar result in terms of image texturing.

Finally, FIG. 14 shows an example of performing the image texturing with a frequency filtering. In the present case, input image *u* of FIG. 5 was textured with the lower frequencies of texturing image *v'* of FIG. 8, leading to a smoother/lighter result compared with the result of FIG. 9.

**Claims**

1. A method for image texturing, wherein the method comprises:

   • providing (S10) an input image *u*,
   • determining (S20) an output image ($w^*$) as a solution of an optimization program equal to:

$$\underset{w}{\mathrm{argmin}} \parallel \beta \cdot w - \alpha \cdot u \parallel$$

under the constraint that the average and the periodical autocorrelation of the output image are equal to a mean and a covariance that are a function of a texture image (v), wherein $\|\cdot\|$ is a predetermined distance, and $\alpha$ and $\beta$ are predetermined luminance vectors respective to the input image and to the texture image (v).

2. The method of claim 1, wherein the predetermined distance is the quadratic distance and determining the output image (w*) comprises determining the Fourier transform of the solution of the optimization program and then inverting said Fourier transform of the solution of the optimization program.

3. The method of claim 2, wherein the mean and the covariance, to which the average and the periodical autocorrelation of the output image are constrained to be equal to, are the average and the periodical autocorrelation of a texturing image (v') that is a function of the texture image and of which Fourier transform ($\hat{v}'(y)$) is determined.

4. The method of claim 3, wherein determining the Fourier transform of the solution of the optimization program comprises, for each frequency (y), rotating uniformly each channel of the Fourier transform ($\hat{v}'(y)$) of the texturing image to align, in the complex plane, the Fourier transforms ($\beta \cdot \hat{v}'(y)$) of the scalar product between the texturing image and the predetermined luminance vector respective to the texture image and ($\alpha \cdot \hat{u}(y)$) of the scalar product between the input image and its respective predetermined luminance vector.

5. The method of claim 4, wherein rotating uniformly each channel of the Fourier transform ($\hat{v}'(y)$) of the texturing image comprises multiplying said Fourier transform ('(y)) of the texturing image with the complex exponential of the difference between the phases of the Fourier transforms ($\alpha \cdot \hat{u}(y)$) of the scalar product between the input image and its respective predetermined luminance vector and ($\beta \cdot \hat{v}'(y)$) of the scalar product between the texturing image and the predetermined luminance vector respective to the texture image.

6. The method of claim 4 or 5, wherein the texturing image (v') is retrieved from a database and corresponds to the result of compressing an image derived from the texture image (v), under the constraint that the Fourier transform of the texturing image (v') is substantially equal to the Fourier transform of the image derived from the texture image (v) modulo a multiplication by a given phase.

7. The method of claim 6, wherein the compressing includes:

   • computing the empirical variance and the average of the texture image or the image derived from the texture image,
   • computing the principal component ($\gamma$) of the texture image or the image derived from the texture image,
   • applying a mask on the result (Tv) of inverting the result ($\widehat{Tv}(y) = \hat{v}(y)\dfrac{\overline{\gamma\hat{v}(y)}}{|\gamma\hat{v}(y)|}$) of multiplying the Fourier transform of the image derived from the texture image with the phase of the Fourier transform of the scalar product between the computed principal component and the image derived from the texture image.

8. The method of claim 7, wherein the predetermined luminance vector respective to the texture image ($\beta$) is equal to the computed principal component ($\gamma$).

9. The method of any of claims 3-8, wherein the texturing image corresponds to the result of processing the borders of an image derived from the texture image to join them.

10. The method of claim 9, wherein the method comprises at least part of the processing of the borders of the image derived from texture image to join them, including:

   • computing a gap image ($\partial v$), representative of the discontinuities of the periodization of the image derived from the texture image,
   • computing the Fourier transform of the gap image,
   • subtracting to the Fourier transform of the image derived from the texture image the Fourier transform of the gap image weighted by a propagating coefficient.

11. The method of any of claims 3-10, wherein the Fourier transform of the texturing image ($\widehat{\mathcal{V}}'$ (*y*)) is further processed by applying a frequency filtering.

12. The method of any of claims 1-11, wherein the texture image is an RGB image, the output image being determined as an RGB image.

13. The method of claim 12, wherein the periodical autocorrelation of an RGB image *s* of dimension $N_1xN_2$ and of average $m_s$ is defined for each pixel of coordinates $x_1$ and $x_2$ of the RGB image *s* as:

$$\Gamma_s(x_1, x_2) \; = \; \frac{1}{N_1 N_2} \sum_{x'_1, x'_2} \; (s(x_1 + x'_1, x_2 + x'_2) - m_s)(s(x'_1, x'_2) - m_s)^{\mathrm{T}} \; .$$

14. A computer program recordable on a data storage medium and comprising instructions for performing the method of any of claims 1-13.

15. A system comprising a processor coupled to a memory having recorded thereon the computer program of claim 14.

providing an input image (u)

S10

determining an output image (w*) as a solution of an optimization program equal to

$$\underset{w}{\operatorname{argmin}} \| \beta \cdot w - \alpha \cdot u \|$$

S20

## FIG. 1

20

1000

1010 CPU

1070 RAM

1020 Mass storage devices controler

1080 Display

1030 Hard drive

CDROM

1090 Haptic device

1040

1050 Network Adapter

1100 Video RAM

1060 Network

1110 GPU

B U S

## FIG. 2

| providing texture image *v* | S1 |

computing a gap image ($\partial$v), representative of the discontinuities of the periodization of *v* — S2

computing the Fourier transform of the gap image — S3

subtracting to the Fourier transform of *v* the Fourier transform of the gap image weighted by a propagating coefficient — S4

S6

computing the empirical variance and the average of the texture image or the image derived from the texture image

computing the principal component(γ) of the texture image or the image derived from the texture image — S7

applying a mask on the result (Tv) of inverting the result of multiplying the Fourier transform of the image derived from the texture image with the phase of the Fourier transform of the scalar product between the computed principal component and the image derived from the texture image — S8

## FIG. 3

FIG. 4

FIG. 5

FIG. 6

FIG. 7

FIG. 8

FIG. 9

FIG. 10

FIG. 11

FIG. 12

FIG. 13

FIG. 14

Europäisches
Patentamt

European
Patent Office

Office européen
des brevets

**EUROPEAN SEARCH REPORT**

Application Number

EP 14 30 5097

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 2002/122043 A1 (FREEMAN WILLIAM T [US] ET AL) 5 September 2002 (2002-09-05) * abstract * * paragraphs [0030] - [0037] * | 1-15 | INV. G06T11/00 |
| A | REINHARD: "Color transfer between images", IEEE COMPUTER GRAPHICS AND APPLICATIONS, vol. 21, no. 4, 1 January 2001 (2001-01-01), page 34, XP055011470, ISSN: 0272-1716, DOI: 10.1109/38.946629 * page 36, right-hand column, line 5 - page 37, left-hand column, line 19 * | 1-15 | |
| A | HOCHANG LEE ET AL: "Directional texture transfer with edge enhancement", COMPUTERS AND GRAPHICS, ELSEVIER, GB, vol. 35, no. 1, 15 November 2010 (2010-11-15), pages 81-91, XP028132918, ISSN: 0097-8493, DOI: 10.1016/J.CAG.2010.11.008 [retrieved on 2010-11-21] * the whole document * | 1-15 | TECHNICAL FIELDS SEARCHED (IPC) G06T |
| A | ASHIKHMIN M: "Fast texture transfer", IEEE COMPUTER GRAPHICS AND APPLICATIONS, IEEE SERVICE CENTER, NEW YORK, NY, US, vol. 23, no. 4, 1 July 2003 (2003-07-01), pages 38-43, XP011097700, ISSN: 0272-1716, DOI: 10.1109/MCG.2003.1210863 * page 38, left-hand column, line 1 - right-hand column, line 17 * * page 40, left-hand column, line 4 - page 41, right-hand column, line 21 * | 1-15 | |

The present search report has been drawn up for all claims

| Place of search | Date of completion of the search | Examiner |
|---|---|---|
| Munich | 26 June 2014 | Klemencic, Ales |

**ANNEX TO THE EUROPEAN SEARCH REPORT
ON EUROPEAN PATENT APPLICATION NO.**

EP 14 30 5097

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2014

| Patent document cited in search report | Publication date | Patent family member(s) | Publication date |
|---|---|---|---|
| US 2002122043 A1 | 05-09-2002 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 6919903 B2